# EUROPEAN PATENT SPECIFICATION

(11) **EP 2 134 111 B1**
(45) Date of publication and mention of the grant of the patent: **01.02.2012**
(21) Application number: 08158085.4
(22) Date of filing: 12.06.2008
(51) Int. Cl.: H04W 24/02

(54) **System and method for reconfiguring a cellular network**
System und Verfahren für die Rekonfigurierung eines zellularen Netzwerks
Système et procédé pour la reconfiguration d'un réseau cellulaire

(43) Date of publication of application: 16.12.2009
(73) Proprietor: TeliaSonera Finland Oyj, 00510 Helsinki (FI)
(72) Inventor: Huoviala, Rauno, 00530, Helsinki (FI); Pihlajamäki, Antti, 00580, Helsinki (FI)
(74) Representative: Niemi, Hakan Henrik

(56) References cited:
- WO-A-92/21182
- WO-A-99/35869
- GB-A- 2 404 113

## Description

### FIELD

The invention relates to configuring a radio network, especially a cellular radio network.

### BACKGROUND

In a radio network, the radio cells are associated with a number of network parameters such as a cell identity, for instance. In the communication between the radio network and mobile stations connecting or connected to the network, some of these network parameters are transmitted to the mobile stations.

Provision of network configuration information to the mobile stations establishes a risk that the network information may be conveyed into the hands of third parties, which may use this information in an undesirable manner, for instance. Furthermore, network operators may consider fluctuation of network configuration information as a security risk to the network.

The publication WO 99/35869 concerns a method for changing a subscriber profile on the basis of the identity of a base station serving the terminal equipment in a mobile communication network. A mobile station is provided with a subscriber identity module. A permanent base station identity independent of configuration changes in the mobile communication network is included in the information signals sent by the base station and the subscriber profile is changed on the basis of the permanent base station identity.

The document WO 92/21182 discloses a method for copying cell parameters of affected radio network controlling units in a cellular network to a database and storing the copied parameters. A set of proposed changes to the stored parameters is prepared. The consistency of the prepared set of proposed changes is then verified and any necessary alterations to the set of proposed changes are made in response to the verification. The verified set of proposed changes is copied to the affected radio network controlling units. Finally the verified set of proposed changes is introduced into the network.

### SUMMARY

In one aspect, there is provided a cellular radio network system including a plurality of radio cells, each cell being associated with a cell identifier. The network system comprises means for changing a cell identifier of a radio cell upon the fulfilment of a triggering condition, and means for communicating the changed value of the cell identifier to a radio device establishing a connection in the radio cell characterized in that the network comprises means for generating a new cell identifier using a time value at the change of the cell identifier.

In another aspect, there is provided a configuring method in a cellular radio network including a plurality of radio cells, each cell being associated with a cell identifier. The method comprises changing a cell identifier of a radio cell upon the fulfilment of a triggering condition, and communicating the changed value of the cell identifier to a radio device establishing a connection in the radio cell characterized by generating a new cell identifier using a time value at the change of the cell identifier.

### DRAWINGS

In the following, the invention will be described in greater detail by means of preferred embodiments with reference to the accompanying drawings, in which
Figure 1 shows an embodiment of a cellular network;
Figure 2 shows another embodiment of a network;
Figure 3 shows an embodiment of a method; and
Figure 4 shows another embodiment of a method.

### DESCRIPTION OF EMBODIMENTS

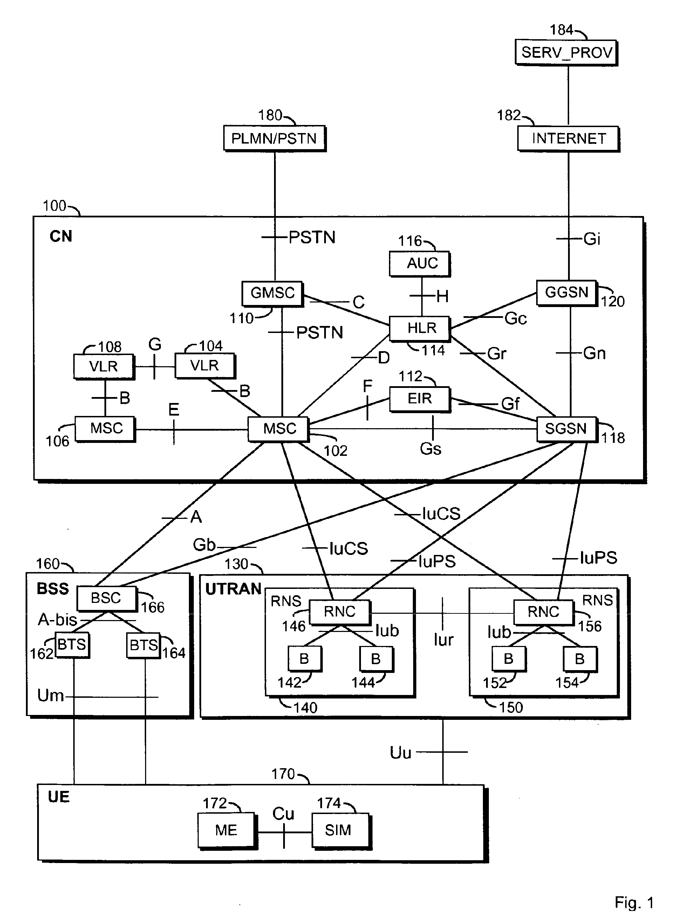

Figure 1 shows an embodiment of a radio network, where elements of different generation radio system coexist. In the following description, GSM (Global System for Mobile Communications) represents the second-generation radio systems. A GSM-based radio system, which employs EDGE (Enhanced Data Rates for Global Evolution) technology for increasing the data transmission rate and which can also be used for implementing packet transmission in a GPRS (General Packet Radio System) system, represents the 2.5 generation radio systems, and UMTS (Universal Mobile Telephony System) represents the third-generation radio systems. The embodiments are not, however, restricted to these systems described by way of example, but a person skilled in the art can also apply the instructions to other radio systems containing corresponding characteristics.

The main parts of a radio system are a core network (CN) 100, a radio access network 130 or a base station system 160 and user equipment 170, which can be for instance a mobile phone. A radio access network 160 of UMTS is called UTRAN (UMTS Terrestrial Radio Access Network) and is implemented by wideband code division multiple access (WCDMA) technology. The base station system 160 belonging to 2/2.5 generation may be implemented by time/frequency division multiple access (TDMA/FDMA) technology.

The structure of the core network 100 corresponds to a combined structure of the GSM and GPRS systems. The GSM network elements are responsible for establishing circuit-switched connections, and the GPRS network elements may be responsible for packet-switched connections. A mobile services switching centre (MSC) 102 is the centre point of the circuit-switched side of the core network 100. The same MSC 102 may serve both the radio access network 130 and the base station system 160. The tasks of the mobile services switching centre 102 may include switching, paging, user equipment location registration, handover management, collection of subscriber billing information, encryption parameter management, frequency allocation management, and echo cancellation.

The core network 100 may have a separate gateway mobile services switching centre (GMSC) 110, which takes care of circuit-switched connections between the core network 100 and external networks 180, such as a public land mobile network (PLMN) or a public switched telephone network (PSTN), for instance.

A home location register (HLR) 114 contains a permanent subscriber register and a visitor location register (VLR) 102, 104 contains roaming information on the user equipment 170 in the area of the MSC 102. An equipment identity register (EIR) 112 contains the international mobile equipment identities (IMEI) of the user equipment 170 used in the radio system. An authentication centre (AuC) 116 contains subscriber authentication data.

A serving GPRS support node (SGSN) 118 may transmit and receive packets with the user equipment 170 via the radio access network 130 or the base station system 160. A gateway GPRS support node (GGSN) 120 is the packet-switched side counterpart to the GMSC 110 of the circuit-switched side. In Figure 1, the Internet represents the external network 182.

The base station system 160 comprises a base station controller (BSC) 166 and base transceiver stations (BTS) 162, 164. The BSC 166 controls the BTSs 162, 164 by for instance taking care of tasks, such as radio resource management of the base transceiver station 162, 164, inter-cell handovers, frequency control, management of frequency hopping sequences, time delay measurement on the uplink, implementation of the operation and maintenance interface, and power control.

The base transceiver station 162, 164 contains at least one transceiver, which provides one carrier, i.e. eight time slots, i.e. eight physical channels. Typically, one base transceiver station 162, 164 serves one radio cell, but it is also possible to have a solution in which one base transceiver station 162, 164 serves several sectored cells. The diameter of a cell can vary from a few meters to kilometers.

The radio access network 130 is made up of radio network subsystems 140 and 150. The UTRAN contains radio network controllers (RNC) 146, 156 and base stations 142 to 144, 152 to 154, which are often referred to using a logical concept "Node B". The main task of the RNC is to control the base stations, the task containing functions such as macro diversity combining/splitting, handling of soft handover, traffic management of common channels and uplink outer-loop power control. A Node B or a base station performs tasks such as inner-loop power control, reporting of uplink interference measurements and downlink power information, mapping information between transport channels and physical channels and RF processing.

Although the base stations 162 to 164 of the GSM network and the base stations 142 to 144, 152 to 154 of the UMTS network are shown to be separate in Figure 1, solutions also exist where the same physical device performs tasks presumed by a GSM network and an UMTS network, for instance the task of implementing both the TDMA and WCDMA radio interfaces simultaneously.

The user equipment 170 comprises two parts: mobile equipment (ME) 172 and a subscriber identity module (SIM) 174. The SIM 174 contains information related to the user and information related to information security in particular, for instance, an encryption algorithm. The user equipment 170 contains at least one transceiver for establishing a radio link to the radio access network 130 or the base station system 160.

Figure 1 also shows a service provider 184, which may be connected to user equipment via the Internet, for instance. The service provider 184 may collect network information, such as the cell identifier of a cell, in which the user equipment resides.

Figure 1 also shows some interfaces between the entities but they are not discussed here in detail.

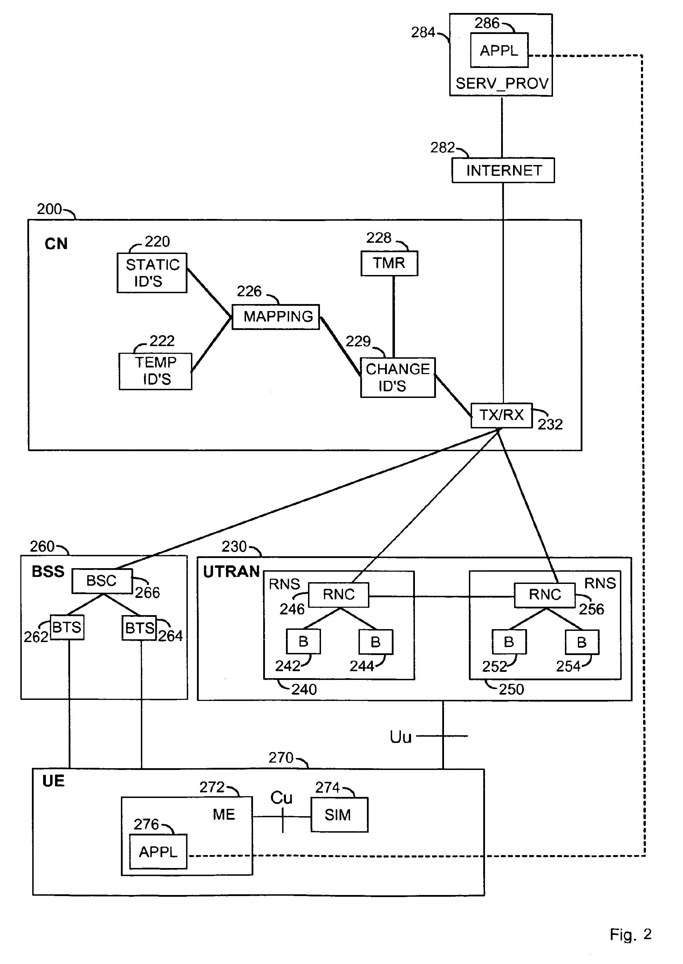

Figure 2 shows another embodiment of a network. In the figure, the BSS layer 260 and UTRAN 230 correspond to those in Figure 1. In the CN, the functionality relating to interfaces of the core network has been included in the transmission/reception (TX/RX) module 232. The TX/RX module thus provides the interfaces to the base station controller 266, the radio network controllers 246, 256, and to the external networks such as the Internet 282.

The core network of Figure 2 also includes an additional functionality illustrated by units 220 to 229. The idea behind the additional functionality is that a cell identifier associated with each of the cells, provided by the base stations 262, 264, 242, 244, 252 and 254 to the mobile stations connected to the base stations, may be changed. The cell identifier may be the cell identity (cell ID), channel identity or code identity, for instance. The cell ID may be transmitted by the base stations to the mobile station 270 on a control channel such as BCCH (Broadcast Control Channel).

Each of the radio cells may be associated with a static/fixed cell ID. The static cell ID is an identity, which is associated with the cell originally, and is not changed. The storing unit 220 stores the static ID's in a table or a database. The core network may also include a unit 229 to change the cell ID periodically.

In an embodiment, the new cell ID is selected from a set of cell ID's including at least two selectable cell ID's. Herein, the new cell ID is called "temporary cell ID". A timer 228 triggers the periodical changing of the cell ID. The timer may trigger the changing five times a day or once a year, for instance. When the timer expires, the timer sends a message to the changing unit 229 stating that a change of the temporary cell ID's should be initiated.

In an embodiment, the changing unit selects a new temporary cell ID randomly from a set of allowable cell ID's. The set of allowable cell ID's includes at least two cell ID's and may include the static cell ID and one or more temporary cell ID's. In another embodiment, the changing unit 229 applies an algorithm, which creates a new cell ID from the static cell ID (or previous/current (temporary) cell ID) and/or a time value. In still another embodiment, the temporary identities are stored in a database 222, and a new value, such as the next value from a list, is read when the timer expires. Instead of a timer, some other predetermined triggering condition, a security alarm or an operation failure in the network, may also be applied.

Furthermore, a mapping unit 226, which keeps track of the mapping from the momentary temporary ID to the static ID, may be provided. That is, upon request, when the temporary ID is input, the mapping unit outputs the static ID.

Thus, the core network 200 may include functionality to change the cell identities of the cells in the network periodically, or as a consequence of some other triggering condition. When the new temporary identities have been created in the changing unit 229, they are communicated to the base station controller and radio network controllers, which in turn may further forward the information to the base stations controlled by them. For instance, the transmitter/receiver unit 232 may transmit new cell ID's for the base stations 262 and 264 via the base station controller 266. Furthermore, the base stations transmit the new temporary cell identity on its broadcast or some other control or traffic channel. Thus, the base station 262 may apply the new temporary cell identity on its broadcast channel and this new cell identity will subsequently be used in new connections. In an embodiment, ongoing connections are not affected by the cell identity change.

Figure 2 shows also user equipment/mobile station 270. The user equipment may include an application 276 stored therein. The application may have been downloaded from the Internet and is executed on the mobile station 270. The dashed line from the application 276 shows a logical connection leading to an application 286 of the service provider. When the application 276 is being run in the mobile station, the application 276 provides the current cell identity to the service provider's application. The provided cell identity is time-dependent.

In an embodiment, the mapping functionality for mapping the changed cell identity to the fixed cell identity is provided in the mobile station. That is, the application 276 directly provides the fixed cell identity as an output to the application 286.

In an embodiment, a cell transmits also cell identities of neighbouring cells. In Figure 2, the base station 262 transmits on a broadcast channel a temporary cell ID of the base station 264 in addition to its own cell ID. A neighbour list, including one or more neighbouring cell ID's, may be subject to the same changing procedure as the actual cell ID.

Even if the cell identifier above has been described to be the cell identity, it may be some other network parameter as well. In another embodiment, the cell identifier is a channel identity that is used for radio communication within the cell. The channel identities may have a form A+B where the prefix A denotes the cell, and the suffix B is a running number. In order to hide the identity of the cell, which the mobile station resides in, at least the A-part of the channel identity may be changed. Then, instead or in addition to the cell identities, the changing unit of the core network may also change the channel identities. If the application 276 in the mobile station provides the channel identity to the application 284 of the service provider, this channel identity may be different at different times due to the periodical changing of the channel ID's. The static channel identities may be stored in the memory 220.

In still another embodiment, the varying of the cell identifier may include changing of a channel code. A spreading code may be allocated to a mobile station for a communication connection. The code may include a portion, which allows identification of the cell unless that portion is changed. Thus, the channel identities used in a cell may be varied at predetermined intervals in a similar manner as the cell identities and the channel identities.

The temporary varying of the cell identifiers may concern more than one cell identifier. When the timer 228 expires, the changing unit may change one or more identifiers of the cell, such as cell identity, the channel identities used in the cell, and the code values used in the cell. In principal, all such identities, which may identify the cell, may be changed at the same time.

Furthermore, the cell identities of a plurality of neighbouring cells may be changed at the same time. The changed cell identifiers of neighbouring cells may be communicated to each cell.

In the embodiment of Figure 2, the functionality for changing the cell identifier is basically located in the core network 200. The embodiment of Figure 2 provides the advantage that the functionality is needed practically in one point in the network only and the base stations and base station controllers do not necessarily need to be synchronized to implement this functionality.

In another embodiment, the changing functionality is placed to the base station controllers and radio network controllers. Then the radio network controller 246 includes a functionality corresponding to the timer 228 functionality, the changing unit 229 functionality and mapping of the static and temporary identities. The radio network controllers 246 and 256 are synchronized to carry out the change exactly at the same time. Signalling between the RNC's 246 and 256 is provided so as to exchange information of the new temporary cell identities. The radio network controller 246 may transmit to the radio network controller 256 the new temporary cell identities of the base stations 242 and 244. This is needed as the base station 244 is a neighbouring base station to the base station 252, and the base station 252 needs to broadcast on its broadcast channel the cell identities (new temporary cell identities) of its neighbouring base stations as well.

In still another embodiment, the changing functionality is provided on the base station level. Thus, in the Figure 2, the timer and changing functionality might be provided in the base station (Node B) 252. The base station 252 then changes its cell identity periodically. The base stations may need to be mutually synchronized such that all the base stations carry out the change at the same time. Furthermore, communication interfaces between the base stations may be provided such that the base stations may deliver their new temporary cell identities to the neighbouring base stations. As an alternative, each base station calculates the new temporary identities of its neighbours itself. Thus, the base station 252 knows that the base station 254 changes its temporary cell ID at the same time as the base station 252 does. The base station 252 calculates, using a calculation algorithm stored in the base station 252, the new temporary cell identity of the neighbouring base station 254.

In another embodiment, the functionality is distributed to different levels of the network. Thus, the timer and monitoring of the timer may be provided in the core network and an algorithm for changing of the cell identity may be in a radio network controller, for instance.

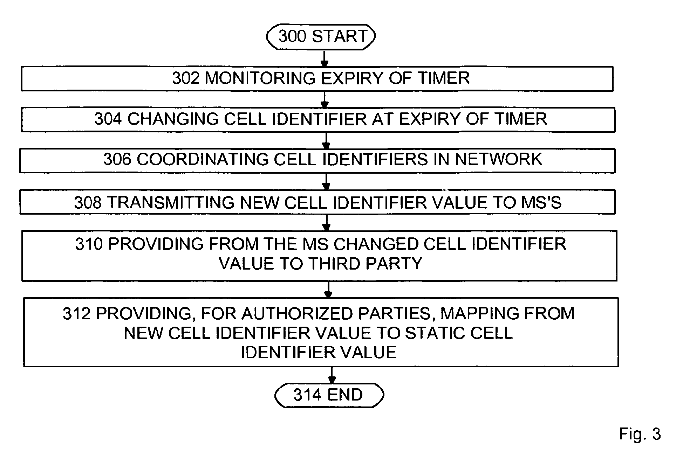

Figure 3 shows an embodiment of a method. The method may be employed in a cellular network including radio cells where the users of the network may be mobile stations. The mobile stations listen to broadcast information from the cells and may connect to the network for applying circuit-switched or packet-switched connections provided by the network. The users are also capable of performing a handover from a radio cell to a neighbouring cell.

One or more cell identifiers identifying the cell may be associated with each cell. The cell identifier may be a cell ID, channel ID or code ID, for instance. A static value for each cell identifier may be provided. Thus, for instance, a static cell ID is associated with each cell.

In 302, the expiry of a timer is monitored. The timer may expire regularly and periodically. The timer may expire often, such as every hour. As an alternative, the timer may expire fairly seldom, such as once a year. The expiry rate of the timer is not necessarily fixed. That is, a first expiry of the timer may occur when one month has lapsed, and the second expiry may occur when two weeks haven lapsed from the first expiry. The timer may be placed in various places in the network, such as in a core network, in a base station (or radio network) controller, or in a base station.

In 304, one or more cell identifiers are changed at an expiry of the timer. As an alternative to the timer, the cell identifiers may be subject to a change upon some other predetermined triggering condition.

If a cell identifier is still in its static value, it is changed from the static value to a first temporary value. At the next change, the first temporary value may be changed to a second temporary value or back to the static value. At the next change the second temporary value may be changed to the static value, to the first temporary value or to a third temporary value. The set of usable cell identifier values, such as cell identities, includes thus at least two cell identities, and one value may be used once or more often. In another embodiment, a certain cell ID value is not repeated but an unused value is selected. As an alternative to a list of selectable values, changing of the cell identifiers is based on an algorithm. The algorithm calculates a new identifier by using a time value and/or the previous cell identifier value, for instance.

In an embodiment, more than one cell identifier is changed at the same time. That is, the cell ID's and the channel ID's are changed at the same time. In an embodiment, all such cell identifiers that allow cell identification are changed.

To maximize the security in the network, the cell identifiers of a group of cells are changed at the same time. The group of cells may include a few neighbouring cells or the cells under a RSC/RNC, or all the cells of an operator, for instance.

The functionality to implement a cell identifier change may be implemented in the core network, in the base station (or radio network) controller or in the base station. The functionality may be also distributed amongst these network elements.

In 306, the changed cell identifiers are delivered to places of interest in the network. That is, if the change of a cell identifier is carried out in the core network, the new identifiers are delivered to all base station controllers and base stations controlled by said base station controller. It may also be ensured that each base station knows the new identities of its neighbouring base stations such that each base station is able to broadcast appropriate neighbour list information. The mobile stations using the network utilize the neighbour list information to measure the strength of the broadcast (beacon) signals of each nearby base station. The mobile station may then connect to a base station providing the strongest beacon signal level.

In 308, a base station transmits the changed cell identifier to a mobile station within the area of the base station. The base station may broadcast a changed cell ID on the broadcast channel. Or, when establishing a connection, a changed channel or code identity associated with the connection may be transmitted to the mobile station on some other control channel.

In 310, the mobile station provides the changed cell identifier to a third party application. For this purpose, an application is stored in the mobile phone. The application in the mobile phone may connect to an external application via the Internet when the mobile phone becomes aware of the new cell identifier value. When the application in the mobile phone receives a cell ID on the broadcast channel, it may transmit it immediately to the external application. If the cell identifier has been changed, the changed cell identifier is transmitted.

In an embodiment, a mapping between the new cell ID and the static cell ID is provided to authorized parties. In an embodiment, a mapping application is coupled to the external application, which mapping application maps the new, changed cell ID to the static cell ID. By this way, a user of the external application and mapping application derives the static cell ID, in which the mobile station is located. Thus, by knowing the static cell ID and by knowing the location of a cell having the cell ID corresponding to the static cell ID, the user of the external application can determine the location of the mobile station. The mapping application may be situated in the mobile station, whereby the mobile station directly maps the changed cell identity received from the network to the static cell identity to be communicated to the third party. As an alternative, the mapping application is used by the third party, which receives the changed cell identity from the mobile station and maps it to the static identity. Mapping from the static cell identity to the changed identifier may be carried out by using a lookup table, or a conversion algorithm, for instance.

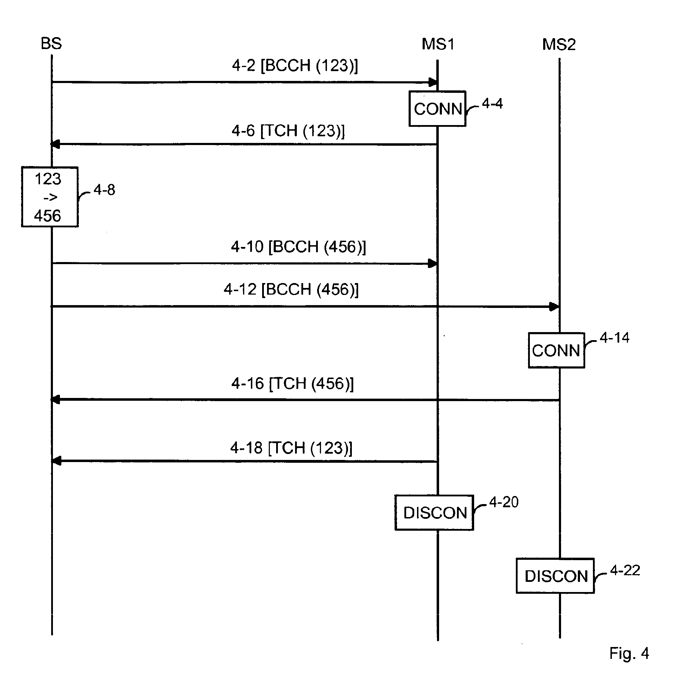

Figure 4 shows a flowchart of a method. Three nodes, a base station (BS) and two mobile stations MS1, MS2 are illustrated in the figure. In 4-2, the base station broadcasts its cell identity "123". It is assumed that MS1 is in the cell area and receives the cell identity information. In 4-4, the mobile station carries out a functionality for establishing a connection on a traffic channel in the cell. As shown by 4-6, during the traffic connection, cell identity "123" is used between BS and MS1.

In 4-8, the cell identity "123" is changed to "456". After that, the cell starts broadcasting the new cell ID "456" on its broadcast channel BCCH. The mobile station MS1 receives the new cell ID on the broadcast channel as shown by 4-10, and the mobile station MS2 receives the new cell ID on the broadcast channel as shown by 4-12. In 4-14, the MS2 establishes a connection with the BS. The cell ID used for the new connection is "456" as depicted by 4-14. However, as illustrated by 4-18, the cell ID of the ongoing connection with MS1 continues to be "123". In 4-20 and 4-22, the respective connections of MS1 and MS2 are disconnected. All subsequent connections will use the changed cell ID "456" until the cell ID is changed again.

The embodiments relate to cellular radio networks including a plurality of radio cells. A base station may establish one or more of the radio cells in the network. A cell identifier is associated with each cell. The identifier may be a cell identity, a channel identity, a code identity or any other identity communicated to the mobile station, which enables identification of the cell. A plurality of cell identifiers of a cell may be changed at the same time. For instance, a cell identity and the channel identities of the cell are both changed simultaneously.

Changing of the cell identifier may be triggered by an expiry of a timer, for instance. The timer may be a periodical timer triggering the change at predetermined intervals.

In an embodiment, when changing the current cell identifier to a new cell identifier, the new cell identifier is selected from a set or list of allowable identities. The new identifier may be the next identifier on the list. In another embodiment, an algorithm is provided for carrying out the change. The algorithm inputs the current time value and/or the existing cell identifier to generate the new cell identifier.

Each cell may, together with its own cell identifier, broadcast also cell identifiers of one or more neighbouring cells. The cell identifiers of the neighbouring cells are needed such that the mobile station is capable of measuring the broadcast channels also of such cells whose cell identities have changed. Therefore, when the cell identifier of a cell changes, the new identifier is provided for the neighbouring cells also.

In an embodiment, the cell identifiers from a group of cells including at least two cells are changed at the same time. That is, by changing identities of a group of neighbouring cells at the same time, a greater security is achieved in the network.

In an embodiment, a fixed cell identifier is stored for each cell. An application is provided that maps the changed cell identifier to the fixed cell identifier. The application may use a lookup table or an algorithm to determine the fixed identity.

In an embodiment, the functionality for changing the cell identifiers is located in a core network element of the cellular network. A functionality is provided to transmit the changed cell identifiers to all base stations controllers and radio network controllers connected to the core network element.

In another embodiment, the functionality for changing the cell identifiers is located in a base station controller or a radio network controller and functionality is provided to transmit the changed cell identities to all base stations controlled by the radio network controller.

In still another embodiment, the functionality for changing the cell identifiers is located in a base station, and the functionality is provided to transmit the changed cell identities to all mobile stations connected to the base station.

A method and a computer program product implementing the method and carrying out the functionality of the apparatus may be provided. The embodiments may be implemented by software, hardware, or a combination thereof. The embodiments may be implemented in one or more processors usable in base stations or base station controllers, for instance. The disclosed functionality in various embodiments may be implemented by way of a computer program product encoding a computer program of instructions for executing a computer process of the above-described method. The computer program product may be implemented in a computer program distribution medium. The computer program distribution medium may be any of the known ways of distributing software, such as a computer readable medium, a program storage medium, a record medium, a computer readable memory, a computer readable software distribution package, a computer readable signal, a computer readable telecommunication signal, and a computer readable compressed software package. As an alternative, some of the functionality may be implemented by hardware, such as ASIC (Application Specific Integrated Circuit) or by a combination of hardware and software.

It will be obvious to a person skilled in the art that, as technology advances, the inventive concept can be implemented in various ways. The invention and its embodiments are not limited to the examples described above but may vary within the scope of the claims.

## Claims

1. A cellular radio network including a plurality of radio cells, each cell being associated with a cell identifier, the network comprising:
means for changing a cell identifier (229) of a radio cell upon the fulfilment of a triggering condition; and
means for communicating (262) the changed value of the cell identifier to a radio device (270) establishing a connection in the radio cell **characterized in that** the network comprises means for generating (229) a new cell identifier using a time value at the change of the cell identifier.

2. A cellular radio network according to claim 1, **characterized in that** the cell identifier includes one or more elements of group comprising a cell identity, a channel identity and a code identity.

3. The cellular radio network according to claim 1, **characterized in that** the network comprises:
means for monitoring (228) a time limit;
means for changing (229) the cell identifier at an expiry of the time limit.

4. The cellular radio network according to claim 1, **characterized in that** the network comprises:
means for changing (229) the cell identifier periodically.

5. The cellular radio network according to claim 1, **characterized in that** the network comprises means for selecting (229) a new cell identifier from a set of allowable cell identifiers.

6. The cellular radio network according to claim 1, **characterized in that** the changing functionality is placed into radio network controllers, which are synchronized to carry out the change exactly at the same time.

7. The cellular radio network according to claim 1, **characterized in that** the changing functionality is placed into base stations, which are mutually synchronized to carry out the change exactly at the same time.

8. The cellular radio network according to claim 1, **characterized in that** the network comprises means for receiving a changed cell identifier of a neighbouring cell; and
means for communicating (262) the changed cell identifier of the neighbouring cell to a radio device (270) establishing a connection in the radio cell.

9. The cellular radio network according to claim 1, **characterized in that** the network comprises:
means for changing cell identifiers, of a group of cells including at least two neighbouring cells, at the same time;
means for informing each cell in the group of cells of the changed cell identifiers of the neighbouring cells in the group of cells.

10. The cellular radio network according to claim 1, **characterized in that** the network comprises a mobile station, the mobile station comprising:
means for storing a fixed cell identifier for a radio cell;
means for mapping the changed cell identifier to the fixed cell identifier; and
means for transmitting the fixed cell identifier.

11. A configuring method in a cellular radio network including a plurality of radio cells, each cell being associated with a cell identifier,
changing a cell identifier (304) of a radio cell upon the fulfilment of a triggering condition; and
communicating (308) the changed value of the cell identifier to a radio device establishing a connection in the radio cell, **characterized by**:
generating (304) a new cell identifier using a time value at the change of the cell identifier.

12. The method according to claim 11, **characterized by**:
monitoring (302) a time limit; and changing (304) the cell identifier at an expiry of the time limit.

13. The method according to claim 11, **characterized by** selecting (304) a new cell identifier from a set of allowable cell identifiers.

14. The method according to claim 11, **characterized by**:
changing (304) the cell identifiers of a group of cells including at least two neighbouring cells at the same time; and
communicating (308), to mobile stations connected to each cell in the group of cells, the changed cell identifiers of neighbouring cells in the group of cells.

15. A computer program product configured to perform the method according to any preceding claim 11 to 14 when run on a computer.

## Patentansprüche

1. Zellfunknetzwerk, umfassend eine Vielzahl von Funkzellen, wobei jede Zelle mit einer Zellkennung assoziiert ist, wobei das Netzwerk umfasst:
eine Einrichtung zum Ändern einer Zellkennung (229) einer Funkzelle bei der Erfüllung einer Auslösebedingung; und
eine Einrichtung zum Kommunizieren (262) des geänderten Werts der Zellkennung zu einer Funkvorrichtung (270), die eine Verbindung in der Funkzelle aufbaut, **dadurch gekennzeichnet, dass** das Netzwerk eine Einrichtung zum Erzeugen (229) einer neuen Zellkennung unter Verwendung eines Zeitwerts bei der Änderung der Zellkennung umfasst.

2. Zellfunknetzwerk gemäß Anspruch 1, **dadurch gekennzeichnet, dass** die Zellkennung ein oder mehrere Elemente einer Gruppe umfasst, die eine Zellidentität, eine Kanalidentität und eine Codeidentität umfasst.

3. Zellfunknetzwerk gemäß Anspruch 1, **dadurch gekennzeichnet, dass** das Netzwerk umfasst:
eine Einrichtung zum Überwachen (228) eines Zeitlimits;
eine Einrichtung zum Ändern (229) der Zellkennung bei einem Ablauf des Zeitlimits.

4. Zellfunknetzwerk gemäß Anspruch 1, **dadurch gekennzeichnet, dass** das Netzwerk umfasst:
eine Einrichtung zum periodischen Ändern (229) der Zellkennung.

5. Zellfunknetzwerk gemäß Anspruch 1, **dadurch gekennzeichnet, dass** das Netzwerk eine Einrichtung zum Auswählen (229) einer neuen Zellkennung aus einem Satz von zulässigen Zellkennungen umfasst.

6. Zellfunknetzwerk gemäß Anspruch 1, **dadurch gekennzeichnet, dass** die Änderungsfunktionalität in Funkneerksteuereinrichtungen platriert ist, die synchronisiert sind, um die Änderung genau zur gleichen Zeit auszuführen.

7. Zellfunknetzwerk gemäß Anspruch 1, **dadurch gekennzeichnet, dass** die Änderungsfunktionalität in Basisstationen platziert ist, die gegenseitig synchronisiert sind, um die Änderung genau zur gleichen Zeit auszuführen.

8. Zellfunknewerk gemäß Anspruch 1, **dadurch gekennzeichnet, dass** das Netzwerk eine Einrichtung zum Empfangen einer geänderten Zellkennung einer benachbarten Zelle;
und eine Einrichtung zum Kommunizieren (262) der geänderten Zellkennung der benachbarten Zelle zu einer Funkvorrichtung (270), die eine Verbindung in der Funkzelle aufbaut, umfasst.

9. Zellfunknetzwerk gemäß Anspruch 1, **dadurch gekennzeichnet, dass** das Netzwerk umfasst:
eine Einrichtung zum Ändern von Zellkennungen einer Gruppe von Zellen, die zumindest zwei benachbarte Zellen umfasst, zur gleichen Zeit;
eine Einrichtung zum Informieren jeder Zelle in der Gruppe von Zellen bezüglich der geänderten Zellkennungen der benachbarten Zellen in der Gruppe von Zellen.

10. Zellfunknetzwerk gemäß Anspruch 1, **dadurch gekennzeichnet, dass** das Netzwerk eine Mobilstation umfasst, wobei die Mobilstation umfasst:
eine Einrichtung zum Speichern einer festen Zellkennung für eine Funkzelle;
eine Einrichtung zum Abbilden der geänderten Zellkennung auf die feste Zellkennung; und
eine Einrichtung zum Übertragen der festen Zellkennung.

11. Konfigurationsverfahren in einem Zellfunknetzwerk, das eine Vielzahl von Funkzellen umfasst, wobei jede Zelle mit einer Zellkennung assoziiert ist,
Ändern einer Zellkennung (304) einer Funkzelle bei der Erfüllung einer Auslösebedingung; und
Kommunizieren (308) des geänderten Werts der Zellkennung zu einer Funkvorrichtung, die eine Verbindung in der Funkzelle aufbaut, **gekennzeichnet durch**:
Erzeugen (304) einer neuen Zellkennung unter Verwendung eines Zeitwerts bei der Änderung der Zellkennung.

12. Verfahren gemäß Anspruch 11, **gekennzeichnet durch**:
Überwachen (302) eines Zeitlimits; und
Ändern (304) der Zellkennung bei einem Ablauf des Zeitlimits.

13. Verfahren gemäß Anspruch 11, **gekennzeichnet durch** Auswählen (304) einer neuen Zellkennung aus einem Satz von zulässigen Zellkennungen.

14. Verfahren gemäß Anspruch 11, **gekennzeichnet durch**:
Ändern (304) der Zellkennungen einer Gruppe von Zellen, die zumindest zwei benachbarte Zellen umfasst, zur gleichen Zeit; und
Kommunizieren (308), zu Mobilstationen, die mit jeder Zelle in der Gruppe von Zellen verbunden sind, der geänderten Zellkennungen der benachbarten Zellen in der Gruppe von Zellen.

15. Computerprogrammprodukt, das konfiguriert ist, um das Verfahren gemäß zumindest einem der Ansprüche 11 bis 14 bei Laufen auf einem Computer durchzuführen.

## Revendications

1. Réseau radio cellulaire comprenant une pluralité de cellules radio, chaque cellule étant associée à un identifiant de cellule, le réseau comprenant :
des moyens destinés à modifier un identifiant de cellule (229) d'une cellule radio quand une condition de déclenchement est satisfaite ; et
des moyens destinés à communiquer (262) la valeur modifiée de l'identifiant de cellule à un dispositif radio (270) qui établit une connexion dans la cellule radio, **caractérisé en ce que** le réseau comprend des moyens destinés à générer (229) un nouvel identifiant de cellule en utilisant une valeur de temps au moment du changement de l'identifiant de cellule.

2. Réseau radio cellulaire selon la revendication 1, **caractérisé en ce que** l'identifiant de cellule comprend un ou plusieurs éléments d'un groupe constitué par une identité de cellule, une identité de canal et une identité de code.

3. Réseau radio cellulaire selon la revendication 1, **caractérisé en ce que** le réseau comprend :
des moyens destinés à surveiller (228) un temps limite ;
des moyens destinés à modifier (229) l'identifiant de cellule à l'échéance du temps limite.

4. Réseau radio cellulaire selon la revendication 1, **caractérisé en ce que** le réseau comprend :
des moyens destinés à modifier (229) l'identifiant de cellule de manière périodique.

5. Réseau radio cellulaire selon la revendication 1, **caractérisé en ce que** le réseau comprend des moyens destinés à sélectionner (229) un nouvel identifiant de cellule parmi un ensemble d'identifiants de cellules permis.

6. Réseau radio cellulaire selon la revendication 1, **caractérisé en ce que** la fonctionnalité de modification est placée dans des contrôleurs de réseau radio, qui sont synchronisés de façon à procéder à la modification exactement en même temps.

7. Réseau radio cellulaire selon la revendication 1, **caractérisé en ce que** la fonctionnalité de modification est placée dans des stations de base, qui sont mutuellement synchronisées de façon à procéder à la modification exactement en même temps.

8. Réseau radio cellulaire selon la revendication 1, **caractérisé en ce que** le réseau comprend des moyens destinés à recevoir un identifiant de cellule modifié d'une cellule voisine ; et
des moyens destinés à communiquer (262) l'identifiant de cellule modifié de la cellule voisine à un dispositif radio (270) qui établit une connexion dans la cellule radio.

9. Réseau radio cellulaire selon la revendication 1, **caractérisé en ce que** le réseau comprend :
des moyens destinés à modifier les identifiants de cellules d'un groupe de cellules qui comprend au moins deux cellules voisines, en même temps ;
des moyens destinés à informer chaque cellule dans le groupe de cellules des identifiants de cellules modifiés des cellules voisines dans le groupe de cellules.

10. Réseau radio cellulaire selon la revendication 1, **caractérisé en ce que** le réseau comprend une station mobile, la station mobile comprenant :
des moyens destinés à stocker un identifiant de cellule fixe d'une cellule radio ;
des moyens destinés à mapper l'identifiant de cellule modifié vers l'identifiant de cellule fixe ; et des moyens destinés à émettre l'identifiant de cellule fixe.

11. Procédé de configuration dans un réseau radio cellulaire qui comprend une pluralité de cellules radio, chaque cellule étant associée à un identifiant de cellule, comprenant les étapes consistant à :
modifier un identifiant de cellule (304) d'une cellule radio quand une condition de déclenchement est satisfaite ; et
communiquer (308) la valeur modifiée de l'identifiant de cellule à un dispositif radio qui établit une connexion dans la cellule radio, **caractérisé par** l'étape consistant à :
générer (304) un nouvel identifiant de cellule en utilisant une valeur de temps au moment de la modification de l'identifiant de cellule.

12. Procédé selon la revendication 11, **caractérisé par** les étapes consistant à :
surveiller (302) un temps limite ; et
modifier (304) l'identifiant de cellule à l'échéance du temps limite.

13. Procédé selon la revendication 11, **caractérisé par** une étape consistant à sélectionner (304) un nouvel identifiant de cellule parmi un ensemble d'identifiants de cellules permis.

14. Procédé selon la revendication 11, **caractérisé par** les étapes consistant à :
modifier (304) les identifiants de cellules d'un groupe de cellules qui comprend au moins deux cellules voisines, en même temps ; et
communiquer (308) à des stations mobiles connectées à chaque cellule dans le groupe de cellules, les identifiants de cellules modifiés des cellules voisines dans le groupe de cellules.

15. Produit programme informatique configuré de façon à exécuter le procédé selon l'une quelconque des revendications précédentes 11 à 14, quand il est exécuté dans un ordinateur.
